# EUROPEAN PATENT APPLICATION

(11) **EP 2 928 097 A1**
(43) Date of publication of application: **07.10.2015**
(21) Application number: 14250063.6
(22) Date of filing: 31.03.2014
(51) Int. Cl.: H04J 14/02

(54) **Optical switching**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

Optical signal switching apparatus comprising:
- an optical matrix switch having a switch input port connected to a transponder,
- an optical splitter connected to the switch and arranged in use to receive an optical signal from the transponder via the switch, combine the optical signal with at least one further optical signal to form a combined optical signal, and to output the combined optical signal to an output fibre link via the switch.

## Description

The present invention relates to optical data transmission and particularly but not exclusively to optical switching apparatus and methods for switching optical signals.

In optical data transmission, a signal is sent as a sequence of light pulses over an optical fibre to a photo detector which converts the optical signal into an electronic one for processing. Various techniques enable multiple signals to be transmitted over a single fibre, the most common ones being Time Division Multiplexing (TDM), and Wavelength Division Multiplexing (WDM). In WDM, the fibre is shared by a number of signals each on a different carrier wavelength channel. In current use is a "fixed grid" of wavelengths specified by the International Telecommunication Union (ITU) allowing for compliant equipment from different manufacturers to operate together. The ITU has specified a number of Dense Wavelength Division Multiplexing (DWDM) grid sizes at 12.5Ghz, 25Ghz, 50Ghz and 100Ghz. 50Ghz is currently the most popular grid size and, using the DP-QPSK modulation format, it is possible to fit a 100Gbit/s signal within a single channel in the 50Ghz grid. However, research into optical transmission beyond 100Gbit/s has shown that higher spectral efficiency formats have to be used, or the spectral width of the signals must be increased to support 400Gbit/s or 1Tbit/s transmission. Use of modulation formats with higher spectral efficiencies limits the distance the signal can propagate due to Optical Signal Noise Ratio (OSNR) penalties; and increasing the spectral width means that the signal can no longer fit within the widely deployed 50Ghz ITU grid.

As is known, communications networks typically comprise a single optical fibre for data transmission in a given direction, so that a fibre pair (one for sending, one for receiving) serves a particular direction at a network node. Current and legacy transponders generate individual tuneable channels e.g. single DP-QPSK 100Gb/s coherent signals for transmission over such links. It is anticipated that the next generation of optical signals will be of variable bitrates and spectrum widths, which will advantageously allow optical resources to be optimally used according to various and varying (over time) needs of the network operators and customers. Current WDM switching apparatus are restricted to operation with a particular transponder type using a particular multiplexing technology. As a result, conventional switches are generally inflexible in terms of their upgradeability for use with the next generation of WDM technology and have to be expensively replaced for use with each new transponder type. They are also limited in their capacity to operate simultaneously with different spectrum generation technologies, so two different spectrum generation methods will require two separate switch units catering specifically to the particular transponder type. In this vein, current and legacy technologies will require yet further systems of their own.

Research into optical transmission beyond 100Gbit/s rates has shown that higher spectral efficiency formats have to be used, or the spectral width of the signals must be increased to support 400Gbit/s or 1Tbit/s transmission. The next generation Elastic Optical Networking (EON) paradigm aims for flexible use of precious spectral resources and is a response to the ever-increasing need for improved transmission capacities and speed. As part of the EON approach, apparatus and techniques based on a flexible grid ("flexgrid") approach (as opposed to the current "fixed grid") allow for user-specified sized wavelength blocks of arbitrary widths to accommodate new, higher, bit rate services, enabling single bigger signal flows instead of numbers of smaller signal channels. This approach seeks to realise operational efficiencies and significant cost savings, while providing higher data capacity. Examples of flexgrid-based signal generation apparatus include Bitrate Variable Transponders (BVTs) which output single channels of selectable bit rates and spectrum widths, and Sliceable Bitrate Variable Transponders (SBVTs) which can generate a wide spectrum containing multiple channels each of which can be defined for a different direction or destination.

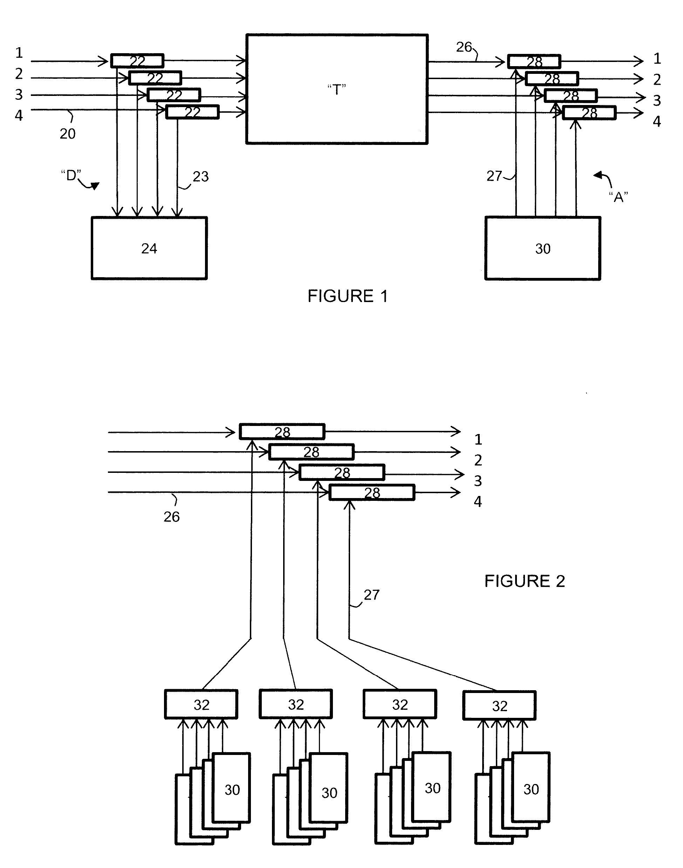

For present purposes, known switching nodes enabling an optical signal to reach a specified destination has three primary functions, allowing for (i) a new signal to be inserted or "added" to the network via the node, (ii) a signal on a link to be extracted or "dropped" where the particular node is the destination of the signal, and (iii) bypass-routing ("through") a signal arriving at the node en route to another destination in the network. These functions will now be described by reference to Figure 1 which depicts the typical elements and operations of an add-drop-through node of the prior art using WDM techniques. The drop functionality (section "D") is depicted on the left hand side, while the add function (section "A") is depicted on the right hand side. Starting from the left hand side, four incoming fibres (20) (arrows labelled 1, 2, 3, 4 pointing to the right) each feed into a 1x2 split demultiplexer (22), which enables a particular signal to be routed through ("T") the switching unit or to be dropped out to a transponder receiver (24) in dependence on its destination. A signal to be dropped is extracted from the stream and redirected via fibre (23) to a receiver associated with the node or some other network path. A through signal is bypass-routed though the switching fabric by directing wavelength channels received via a node input fibre to the correct node output fibre to enable onward transmission to the desired adjacent nodes. Specifically, this is carried out by a bypass element demultiplexing the signal into the individual wavelength channels, which are then switched to the desired output and re-multiplexed for onwards transmission over an outgoing fibre (26) via a second set of a 1 x2 splitter or combiner (28). A signal to be added at this node is sent (via fibre (27)) using a transponder transmitter (30) which combines the new signal with the through data stream as it progresses out of the node on an outgoing fibre (26) (depicted by the arrows labelled 1, 2, 3, 4 pointing to the right). The incoming and outgoing fibres represent different "directions" taken by the signals, and the receiver (for dropping) and transmitter (for adding) functionalities are usually combined in a single transceiver component.

Figure 2 depicts in greater detail the operation of the add function (section "A" on the right hand side in Figure 1). As shown, signal adding is carried out using transponders (30) which are arranged in clusters so that a number of transponders are each directly plugged into a multiplexing unit (32). Signals output by each transponder within a cluster are initially multiplexed with each other, and the multiplexed signal then combined with the through traffic on outgoing fibre (26) via the 1x2 combiner (28). Signal combination can be carried out in a number of ways, e.g. by using a passive combiner in the form of an array of 3dB couplers or a 1x16 split unit which combines signals from 16 transponders. A lower-loss option is to use a wavelength device such as a grating (e.g. an Arrayed Waveguide Grating (AWG)) having a number of inputs (e.g. 40) and a single output, in which a signal of the correct wavelength output by a transponder laser coupled to the correct input port will emerge from the expected output port.

Conventional add approaches are configured to operate under existing fixed grid WDM regimes of the type described above. As previously noted, demands on network capacity and speeds are putting pressure on existing configurations and technologies, and as networks get bigger, the number of fibre pairs per node increases beyond one fibre pair per direction. It is by no means certain that existing systems can be reconfigured for new purposes, and even if this was possible, the time and cost of doing so may be prohibitive. Furthermore, the typical practice in respect of equipment replacement to accommodate new technologies is to build a separate system which will exist and be operated in parallel with unrelated legacy systems, with all the attendant operational costs and space issues. This approach is preferred because of the risk of a loss or reduction in service provision to customers that might result from complete handover of service to the new system, assuming that this was even possible. It would be appreciated that once built, the new node is fixed in its configuration and in that sense might be considered to be already obsolete which limits the network operator's ability to change to the most appropriate technology for use at a particular point in time. In short, such an approach lacks the flexibility needed to upgrade equipment, systems and techniques as and when add multiplexing new methods and apparatus are developed.

This restriction stems primarily from the permanent connection of transponders (30) to a particular port of the switch fabric, which prevents it from being easily moved. If a network operator was to consider re-routing by disconnecting the transponders from their ports, the node would have to be taken out of commission for at least a few hours before upgrading it: this is a significant and risky amount piece of work which can potentially disrupt a great many customers. Practically, therefore, the node is locked into its Day One configuration, which determines and limits its functionality to the specific technology type, fibre connection capacity, and fibre directions. This inflexibility restricts the use of technologies in which signals may be transmitted at different bitrates, have various spectrum widths, be generated by different transponder types and so on.

An example of a next generation signal type is one which does not conform to fixed grid sizes and/or has as arbitrary bitrate, generated e.g. by a BTV which can generate a single high bandwidth channel. Another example is a "superchannel", comprising a grouping of multiple channels which can carry demands which are too large to be handled by a single optical channel, in which the combined group of modulated carriers is treated as a single channel. This typically occupies greater spectral width than a conventional fixed grid sizes, and depending on whether any of the channels are addressed to a particular node, are either bypass-routed through the node as a single unfiltered entity for "slicing" at a node further along the network - e.g. divided into two channels and each half sent in two directions after passing through the current node to its end destination. If the superchannel comprises a channel which is destined for the particular node, or if channels within the superchannel are destined for different directions, it can be sliced at the local node as will be described further below. Such complex signals can be generated or output by SBVTs which can produce a wide spectrum containing multiple channels, potentially going to different destinations.

Various attempts have been made to improve optical switch operational flexibility. In respect of the add functionality in particular, one known solution is to directly plug transponders (30) into an NxM Wavelength Selective Switch (WSS) to enable flexible multiplexing and routing of wavelengths to different output directions. An example is described in "Benefit of Pure NxM WSS for Optical Multiflow Application" Zami T., Lavigne B. (Optics Division, Alcatel-Lucent, Route de Villejust, 91620) OTh4B.2.pdf OFC/NFOEC Technical Digest © 2013 OSA. However WSS units have very few ports (e.g. 1x9), so options using a WSS are expensive on a per-port basis owing to the need to commit a port to each laser signal in use. Interconnecting all the devices is technically complex particularly if used as part of a very high-capacity solution. In other words, this approach may not be economically viable and fails to scale well in a future which envisages significantly greater amounts of data being transmitted using e.g. flexgrid-based approaches of the types discussed above. Furthermore, this solution is inherently "lossy" and with NxM WSS units not yet commercially being available, this approach may not be implementable as a practical matter. It also lacks flexibility in terms of ability to deal with multiple types of transponder from legacy to sliceable bit rate variable transponders.

Another proposal is set out in "Silica-based PLC Transponder Aggregators for Colorless, Directionless, and Contentionless ROADM" Watanabe T., Suzuki K., and Takahashi T. (NTT Photonics Laboratories, NTT Corporation, 3-1 Morinosato-Wakamiya, Atsugi, Kanagawa, 243-0198 Japan) OTh3D.1.pdf OFC/NFOEC Technical Digest © 2012 OSA. This describes using a Multicast Switch (MCS) which combines splitters and on/off optical switches, which allows one of many inputs to pass through whilst terminating the others. This suffers from many of the same issues as in using a WSS. It allows for some degree of flexibility in terms of signal direction, but the particular transponder input remains committed to the "right" port it is hardwired to in the first instance, which limits the possibility of deploying e.g. another transponder type in place of the existing input.

Yet another suggestion is to include an optical cross connect (OXC) switch at the output to allow a signal to be added to be matched with its correct client transponder. This approach makes a particular port more "agnostic" to accept connections with various transponder types, but the hardwired port connection is still unalterably committed at set up.

In short, conventional and known proposed add designs and method which either combine signals using a passive splitter/combiner or an optical filter component such as a grating or WSS, fail to scale well to accommodate the desired level of complexity posed by the new WDM technologies. It would be desirable to provides a flexible way to carry out the add functionality of a node in a cost-efficient, scalable way which allows flexible deployment of different and changing transponder types and numbers as needed, including the continued deployment of legacy and current approaches until they become obsolete.

It would be desirable to be able to combine signals from multiple types of transponders simultaneously and flexibly, in a way which is adaptable to differing capacity needs over time and which is upgradeable to operate with new transponder technologies.

According to a first aspect of the present invention, there is provided an optical signal switching apparatus comprising:
- an optical matrix switch having a switch input port connected to a transponder,
- an optical splitter connected to the switch and arranged in use to receive an optical signal from the transponder via the switch, combine the optical signal with at least one further optical signal to form a combined optical signal, and to output the combined optical signal to an output fibre link via the switch.

In embodiments of the invention, an optical node includes an optical fibre switch which serves as an intermediary component between a signal generating transponder and an output fibre and splitter. This makes available different components providing different functionalities to a network operator in a relatively compact, cost-efficient way in that signals or channels can be directed to the relevant component for the desired "processing" as needed. By not fixing the optical paths between inputs and output ports at the build stage, they can be specified to allow channels to be directed to the desired destination output selected by the network operator.

In use, a particular channel exiting the switching fabric can be reinserted into the switch for further "processing" as desired by being further directed within the fibre switch to one or more further functionality(s) before existing the node on an output fibre. This manner of "cascading" the processing of a channel prior to its addition to the output link allows for greater operational flexibility of an existing node even in the face of changing technology.

Specifically, signals are directed to a splitter for combination with other signals, which may be of same type (e.g. all fixed grid single pre-multiplexed channels) or with different signal types. Examples of different signal types are those output by BVTs or SBVTs - as will be described in detail below. The resulting combined signal can therefore comprise a multiplexing of signals all of the same type, of two of the three described types, or a combination of all types of signals including superchannels.

Preferably, the switch comprises an OXC.

In preferred embodiments, the signals generated by e.g. a conventional fixed grid transponder are multiplexed before they are inserted or received into the switch, by deployment e.g. of an AWG.

According to a first aspect of the present invention, there is provided a method of adding optical signals at an optical node connected to an output fibre link comprising
- outputting an optical signal using a transponder,
- inserting the optical signal into an optical matrix switch connected to the transponder, and directing it to an optical splitter connected to the switch,
- inserting the optical signal into the optical splitter, and combining the optical signal with at least one further optical signal to form a combined optical signal, and
- outputting the combined optical signal from the splitter to the output fibre link via the switch.

Embodiments of the present invention will now be described, by way of example only, with reference to the accompanying drawings in which:
Figure 1 is a block diagram of an add-drop-through node according to the prior art;
Figure 2 is a detail of the add functionality in an add-drop-through node of the prior art;
Figure 3 depicts the addition of a fixed grid signal according to the invention;
Figure 4 depicts the addition of a BVT signal according to the invention;
Figure 5 depicts the addition of a SBVT signal according to the invention; and
Figure 6 is depicts the components and route paths of the add function section of an exemplary switch node configured according to the invention.

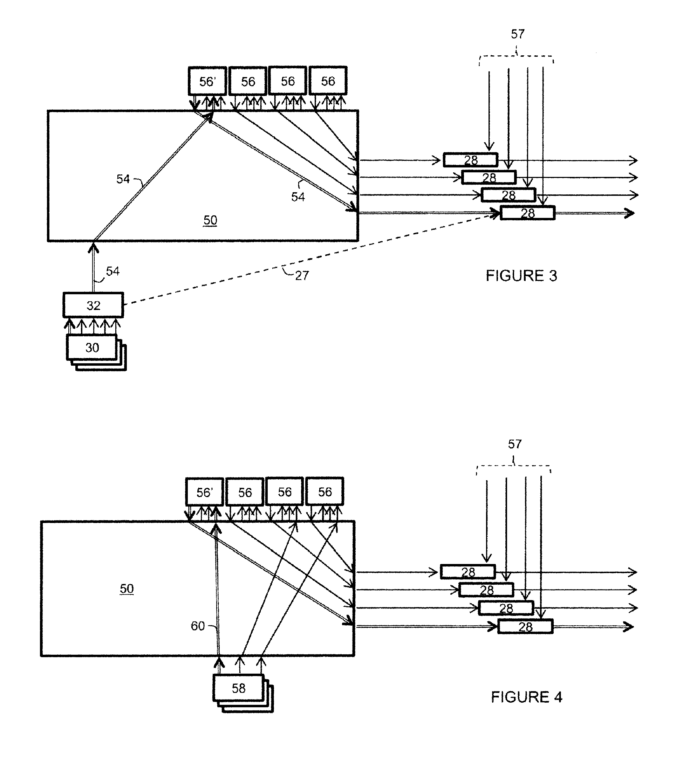

Figure 3 depicts how a fixed grid channel of the prior art can be added to a node configured according to the invention. At its heart is an optical fibre switching matrix (50) which can switch inputs to output ports and fibres preferably at low loss rates, which may take the form of an Optical Cross Connect (OXC). As is known, an OXC is an all optical matrix switch configured to switch fibres to fibres, leaving the optical spectrum carried by the fibres intact. The node can be classified according to the number of fibre "directions" that converge at that node. As noted above in connection with Figures 1 and 2, fixed grid signals are conventionally added using a number of single channels transponders (30) which are arranged to output signals to a multiplexing component (32) e.g. an AWG. In the prior art, the resulting multiplexed signal is then transmitted to the output optical splitter or combiner (28, see Figure 2), depicted in Figure 3 by the dotted arrow (27). The terms "splitter" or "combiner" as used herein refers to a component or functionality for receiving optical signals or channels at an input port and which outputs copies of the received optical signal at each of multiple output ports. A 1xN optical splitter comprises one input port and N outputs; optical signals received at the input port are branched to all of the N output ports.

In contrast, embodiments of the invention are arranged so that the signals are initially fed into the OXC as indicated by arrow (54), and not to the outputs. In the exemplary set up shown in Figure 3, the channels (54) are directed internally within the OXC fabric for direction switching to one of a bank of intermediate 1 xN passive splitters (56) which combine single channels with each other and sends the result on the output fibre to the output combiner (28). These output combiners have a 1 x2 split ratio allowing for the multiplexed channels to be further combined with the output of e.g. a Reconfigurable Optical Add Drop Multiplexer (ROADM) on Demand (57), for onward transmission along the link to the next node and beyond.

In the example depicted, the single channel combiner (56) receiving the legacy channel (54) has a 1x3 split ratio, allowing for three inputs to be multiplexed together before it is directed out of the switch and onto the output fibre. The skilled person would appreciate that the combiner can comprise any split ratio 1xN in dependence on operational requirements. This arrangement advantageously allows the network operator to combine the multiplexed fixed grid channels (54) agnostically with any other signal type which may not be fixed grid channels like the legacy channel (54). In the example in Figure 3, the other two signals (indicated by the solid arrows exiting the OXC and pointing into the particular combiner (56') received into the particular combiner may have been generated by a BVT or an SBVT. These various signal types can be combined with the fixed grid single channel on a same fibre, if desired. The single channel combiners (56) can have a split ratio appropriate to the network operator's and customer's needs in the particular case. Furthermore, the combiners (56) need not all have the same split ratios as each other.

Interposing a fibre switch in this way between the transponders and the node outputs allows for the channels to be "pre-processed" within the OXC (50) before they leave the node. In the example discussed above in connection with Figure 3, the legacy single channel (54) has been combined with non-like signals. While it would be expected that the node would be built according to requirements and then its configuration unchanged over its lifetime, the skilled person would appreciate that is possible to reconfigure it if and when circumstances permit. This allows for different multiplexing technologies to be used as and when needed in a truly dynamic fashion allowing network operators significantly greater flexibility and control in an operating context where a number of different technologies are in use at the same time. As may also be expected, the flexibility of approach is also very useful during times of upgrades from a legacy to a new spectrum generation technology.

In similar vein, Figure 4 depicts how a node configured according to the invention adds signals output by a BVT (58). As noted previously, these are single channels of non-fixed bit rates and/or spectrum widths chosen by the operator. Here, the switch routes a BVT signal (60) to the same 1 xN split combiner (56') which had received the single channel (54) discussed against Figure 3 above. As shown, the BVT channel (60) need not be pre-multiplexed prior to insertion into the fibre switch in the way that fixed grid channels ((54 in Figure 3) are; embodiments of the invention however flexibly allow for this to be carried out if necessary, by a conventional AWG or other new multiplexing technologies. In the same way, other non-BVT inputs (e.g. the solid arrows exiting the OXC and entering combiner (56) could comprise legacy fixed grid channels to be combined on the same output fibre as the BVT signal if this is desired.

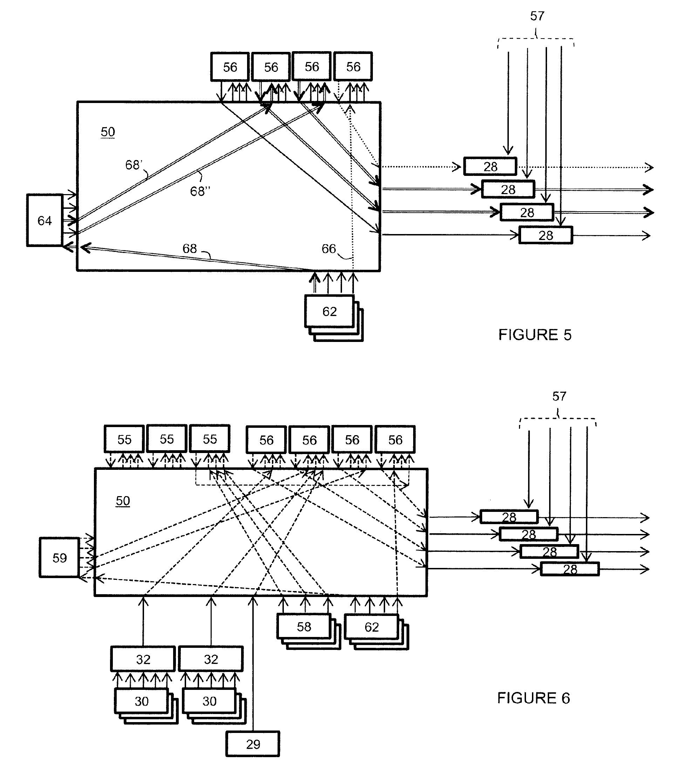

Figure 5 depicts how a signal output by a SBVT (62) is added. A superchannel comprising multiple channels can be addressed to (i) one or (ii) a number of different fibre directions, and is processed by node in dependence on whether it is to be sent to more than one destination, as well as the destination of the channels that will be sliced at a later node further along in the network. Where the channels are to exit the node in one direction (so that the superchannel is sliced only at another node in the network), they are directed as a single superchannel unit (66) within the fibre switch (50) to be multiplexed by an intermediate passive splitter (56) and then transmitted by the output combiners (28) as depicted. The SBVT can also generate multiple channels destined for different directions, in which case a WSS component can be included to provide a channel slicing functionality connected to the fabric switch. As shown in Figure 5, the composite signal (68) output by the SBVT directed by the OXC to a WSS (64) is sliced into two channels (68' and 68"). In the example shown, these are each sent to a 1xN split combiner (56) which combines the respective channels with others. The combined signals then exit the switch on two separate fibres. As previously described, other inputs generated by a variety of transponder types can be combined with the SBVT channel using the combiner (56) on the same output fibre if this is required.

Figure 6 depicts a node including an exemplary OXC (50) arranged according to the invention and how the various channels output by the abovementioned transponder types are routed (shown in dotted lines) within the switch. As shown, a total of 16 functionalities are connected to the switch, viz. two AWG fixed grid multiplexers (32) into which feed single channel transmitters (30), BVTs (58), SBVTs (62), four single-channel combiners (56), three preliminary single-channel passive splitters or combiners (55) and a WSS (59) which as is known is an optical multiplexing component. In the example shown, multiplexed legacy channels are generated by transponders (30) are multiplexed twice (once at an AGW (32) and again at a combiner (56)) before being directed out of the switch on a output fibre and possibly combined with further output from a ROADM on demand (57). A single channel generated by a transponder (29) can also be sent directly to a combiner without passing through an AWG multiplexer for subsequent combination. A channel output by a BVT (58) can go through a two single-channel combining stages, first at combiner (55) before being directed to a second at combiner (56) before being sent on the output fibre to the 1x2 splitter (28). As noted above in connection with Figure 4, it is possible to direct the BVT channel directly to the final combiners (56) with no preliminary combining step, so the specific configuration of the node depends on the needs of the network operator who has the flexibility to set it up as desired. One SBVT channel is directed in its entirety to a combiner (56) and the out of the node. A second SBVT channel is directed to the WSS (59) where it is separated into two channels, each of which is sent to a combiner (56) and then out to output splitters (28) on separate fibres.

In summary, add transponders of a desired type are plugged in to the OXC, and the channels output from such transponders flexibly multiplexed together as required using a range of passive splitters / combiners or optical multiplexers like a WSS, or a grating. By interposing a fibre switch between transponder and outputs in this way, any channel can be combined with any other channel(s) as required, and the combinations can be changed dynamically by re-tuning and re-routing the relevant transmitting transponder. This is enabled by not committing a particular input port to a particular output port on Day One as is conventional practice, but enabling optical pathways to be mapped within the fabric of the fibre switch as required so that an optical signal can be directed to the desired output port and fibre. This demonstrates the flexibility of using a low-loss OXC in this way which can be configured in a variety of ways in dependence on what the operator and customer needs in the particular case. Various functionalities can be provided by connection to the central switch, enabling a channel originating from different transponder types can be pre-processed to achieve a variety of different aims. Savings on OXC port numbers can also be made using this approach. The components providing such functionalities are not tied to a particular fibre or signal, and these resources can be productively shared by a greater number and variety of channel and signal types. The following advantages which can be realised include:
- Transponders can be added to a general resource pool as needed
- Different transponder technologies (legacy, current and future) can be combined in operation
- Provision is inherently made for the next generation of transponder technologies such as SBVTs which produce light destined for multiple nodes, within the same device
- Easy re-provisioning when changes need to be made, rather than having individual transponders locked in to their original circuit when provisioned on Day 1
- Different multiplexing technologies, appropriate to each type of transponder, can be used simultaneously.

The apparatus, methods and configurations described above and in the drawings are for ease of description only and not meant to restrict the scope of the invention to any particular embodiment. For example, it will be apparent to the skilled person that steps can be added, omitted or substituted from the methods and processes described herein within the scope of the invention. In particular, references OXCs in the description and the claims would cover fibre switches which have the structural and/or operational characteristics of OXCs. The invention revolves around the provision of a fibre matrix switch which allows channel inputs to be directed to output ports to which may be connected the desired number and variety of required functionalities such as multiplexers or switches.

Another example of alternative ways to implement the invention would be that the node and/or switch herein can be used with transponder types beyond those described, such as spectrum comb generators which may be inserted into the OXC and copied multiple times and then fed through to an array of modulators.

It would also be appreciated by the skilled person that use of the switching apparatus is not restricted to use with all transponder types simultaneously, but that it can be usefully deployed for use with just two or even one transponder technology at any one time.

## Claims

1. Optical signal switching apparatus comprising:
- an optical matrix switch having a switch input port connected to a transponder,
- an optical splitter connected to the switch and arranged in use to receive an optical signal from the transponder via the switch, combine the optical signal with at least one further optical signal to form a combined optical signal, and to output the combined optical signal to an output fibre link via the switch.

2. Optical signal switching apparatus according to claim 1 wherein the optical matric switch comprises an optical cross connect.

3. Optical signal switching apparatus according to claim 1 or claim 2 comprising a multiplexer to multiplex the optical signal prior to insertion into the optical matric switch.

4. Optical signal switching apparatus according to any preceding claim wherein the switch comprises a plurality of switch input ports, a first of the plurality of switch input ports being connected to a first transponder arranged to output a first signal type, and a second of the plurality of switch input ports being connected to a second transponder arranged to output a different, second, signal type, and wherein the optical splitter is arranged in use to combine the first signal and the second signal.

5. Optical signal switching apparatus according to any claim 4 wherein the first signal type and the second signal type comprises any one of (i) a fixed grid signal, (ii) a signal having a variable, user-defined, bitrate and/or spectrum width, or (iii) a superchannel.

6. Optical signal switching apparatus according to any one of claims 1 to 4 wherein the transponder comprises a bitrate variable transponder or a sliceable bitrate variable transponder.

7. Optical signal switching apparatus according to any preceding claim wherein the optical splitter is comprised in a first plurality of optical splitters, each of the first plurality of optical splitters being arranged in use to receive an optical signal from a transponder via the switch.

8. Optical signal switching apparatus according to claim 5 further comprising a second plurality of optical splitters, each of the second plurality of optical splitters being arranged in use to receive an optical signal from a transponder via the switch, and to output the combined optical signal to a selected one of the first plurality of optical splitters via the switch.

9. Optical signal switching apparatus according to any preceding claim further including a wavelength selective switch arranged in use to receive an optical signal from a transponder via the switch, and to output the combined optical signal to a selected one of the first plurality of optical splitters via the switch.

10. Optical signal switching apparatus according to any preceding claim further comprising a third plurality of optical splitters connected to the switch each via an output fibre link, arranged to receive the combined optical signal to a selected one of the third plurality of optical splitters over a selected fibre link, and any output from a reconfigurable optical add drop multiplexer.

11. Optical signal switching apparatus according to any preceding claim comprising a fibre link between a transponder and one of the third plurality of optical splitters.

12. A method of adding optical signals at an optical node connected to an output fibre link comprising
- outputting an optical signal using a transponder,
- inserting the optical signals into an optical matrix switch connected to the transponder, and directing it to an optical splitter connected to the switch,
- inserting the optical signal into the optical splitter, and combining the optical signal with at least one further optical signal to form a combined optical signal, and
- outputting the combined optical signal from the splitter to the output fibre link via the switch.

13. A method according to claim 12 wherein the optical signal and the at least one further optical signal are different signal types.
